# FASCICULE DE BREVET EUROPEEN

(11) **EP 3 485 183 B1**
(45) Date de publication et mention de la délivrance du brevet: **29.07.2020**
(21) Numéro de dépôt: 17742808.3
(22) Date de dépôt: 20.06.2017
(51) Int. Cl.: F16H 57/04, F16H 61/00, B60K 6/48

(54) **DISPOSITIF DE CONTRÔLE DE LA PRESSION HYDRAULIQUE D'UN ACCUMULATEUR D'ACTIONNEUR DE BOÎTE DE VITESSES D'UNE CHAÎNE DE TRANSMISSION HYBRIDE DE VÉHICULE**
VORRICHTUNG ZUR STEUERUNG DES HYDRAULIKDRUCKS EINES GETRIEBESTELLERAKKUMULATORS EINER HYBRIDEN ÜBERTRAGUNGSKETTE EINES FAHRZEUGS
DEVICE FOR CONTROLLING THE HYDRAULIC PRESSURE OF A GEARBOX ACTUATOR ACCUMULATOR OF A HYBRID TRANSMISSION CHAIN OF A VEHICLE

(30) Priorité: 12.07.2016 FR 1656664
(43) Date de publication de la demande: 22.05.2019
(73) Titulaire: PSA Automobiles S.A., 78300 Poissy (FR)
(72) Inventeur: MARCHYLLIE, Alexis, 33160 St Medard en Jalles (FR); HABBANI, Ridouane, 92600 Asnieres sur Seine (FR); TROJANI, Joseph, 89100 Sens (FR)
(86) Numéro de dépôt international: PCT/FR2017/051636
(87) Numéro de publication internationale: WO 2018/011482

(56) Documents cités:
- US-A1- 2002 165 059
- US-A1- 2004 063 539

## Description

L'invention concerne les véhicules comprenant une chaîne de transmission hybride.

Certaines chaînes de transmission hybride comprennent un moteur thermique couplé à une boîte de vitesses via un organe de couplage (comme par exemple un embrayage) et une machine motrice électrique alimentée en courant électrique par une batterie. On entend ici par « machine motrice électrique » une machine (ou un moteur) électrique capable de produire du couple à partir de l'énergie électrique qui est stockée dans au moins une batterie.

Le couplage mentionné dans le paragraphe précédent est destiné à permettre la fourniture, à un train de transmission, d'un couple qui est produit soit par le seul moteur thermique (mode tout thermique), soit par la seule machine motrice électrique (mode tout électrique), soit à la fois par le moteur thermique et par la machine motrice électrique (mode hybride).

On connait du document de brevet US-A1-2002165059 un procédé et dispositif pour transférer le couple d'au moins un générateur de couple à au moins une roue d'un véhicule hybride. L'appareil comprend une paire d'embrayages couplés en fonctionnement qui fournissent ensemble un rapport de vitesse réglable dynamiquement, efficace pour permettre au véhicule d'être lancé rapidement et efficacement et de fonctionner efficacement après le lancement.

Certaines boîtes de vitesses de ces chaînes de transmission hybride ont un fonctionnement contrôlé par un actionneur hydraulique. C'est notamment le cas des boîtes de vitesses automatiques (ou BVA) ou manuelles pilotées (ou BVMP) ou à double embrayage (ou DCT).

Dans ces boîtes de vitesses, l'actionneur hydraulique est commandé par un moteur hydraulique qui comporte un accumulateur alimenté en fluide par une pompe hydraulique mécanique entraînée par le moteur thermique. Afin que cet actionneur hydraulique puise agir, il faut que la pression de l'accumulateur soit supérieure à un seuil prédéfini. Par conséquent, lorsque l'on veut actionner la boîte de vitesses alors que la pression de l'accumulateur est inférieure à ce seuil prédéfini, on est contraint d'attendre que la pompe hydraulique mécanique ait remonté sa pression hydraulique à une pression prédéfinie, après avoir été mise en fonctionnement à cet effet, sous réserve que le moteur thermique fonctionne. En d'autres termes, tant que la recharge de pression de l'accumulateur n'est pas terminée, on ne peut pas actionner la boîte de vitesses, et lorsque le moteur thermique ne fonctionne pas, il n'est pas possible de recharger l'accumulateur.

Afin d'améliorer la situation, il a été proposé d'adjoindre à la chaîne de transmission une pompe hydraulique électrique alimentée par une batterie et chargée de recharger la pression de l'accumulateur. Hélas, ce mode de recharge s'avère relativement lent, typiquement il prend jusqu'à environ deux secondes, notamment lorsque la température à l'extérieur de la boîte de vitesses est inférieure à un seuil prédéfini et/ou lorsque l'actionneur n'a pas été utilisé depuis longtemps (et donc que le niveau de pression dans l'accumulateur est très faible).

L'invention a donc notamment pour but d'améliorer la situation.

Elle propose notamment à cet effet un dispositif de contrôle destiné à équiper un véhicule ayant une chaîne de transmission hybride comprenant un moteur thermique couplé, via un organe de couplage et une machine motrice électrique alimentée en courant électrique par une batterie, à une boîte de vitesses dont le fonctionnement est contrôlé par un actionneur hydraulique commandé par un moteur hydraulique comportant un accumulateur alimenté en fluide par une pompe hydraulique mécanique.

Ce dispositif se caractérise par le fait qu'il comprend des moyens de contrôle propres à faire fonctionner la machine motrice électrique selon un régime choisi pour induire un entraînement de la pompe hydraulique mécanique propre à augmenter une pression à l'intérieur de l'accumulateur, en cas de détection d'une situation requérant une augmentation rapide de la pression hydraulique à l'intérieur de l'accumulateur au moins jusqu'à un premier seuil lorsque seule la machine motrice électrique doit fonctionner.

Ainsi, lorsque le moteur thermique ne fonctionne pas (et ne doit pas fonctionner), on fait fonctionner spécifiquement la machine motrice électrique selon un régime choisi pour entraîner la pompe hydraulique mécanique et ainsi augmenter la pression dans l'accumulateur, ce qui permet avantageusement une augmentation rapide de la pression.

Le dispositif de contrôle selon l'invention peut comporter d'autres caractéristiques qui peuvent être prises séparément ou en combinaison, et notamment :
- ses moyens de contrôle peuvent être propres à détecter la situation lorsqu'une température à l'extérieur de la boîte de vitesses est inférieure à un second seuil prédéfini ;
- ses moyens de contrôle peuvent être propres à faire fonctionner la machine motrice électrique selon le régime choisi après réception d'une information de fin d'initialisation d'un ensemble comprenant au moins la boîte de vitesses, l'organe de couplage, la machine motrice électrique et la pompe hydraulique mécanique, et après vérification d'une aptitude de la batterie à alimenter la machine motrice électrique pour qu'elle fonctionne selon le régime choisi ;
- ses moyens de contrôle peuvent être propres à arrêter de faire fonctionner la machine motrice électrique selon le régime choisi lorsque la pression hydraulique à l'intérieur de l'accumulateur est supérieure ou égale au premier seuil ;
- lorsque la chaîne de transmission comprend une pompe hydraulique électrique couplée à l'accumulateur et propre, lorsqu'elle est alimentée en courant électrique par la batterie, à augmenter la pression hydraulique à l'intérieur de l'accumulateur, ses moyens de contrôle peuvent être propres à faire fonctionner la pompe hydraulique électrique en contrôlant son alimentation électrique, en complément de la pompe hydraulique mécanique, en cas de détection de la situation ;
   > ses moyens de contrôle peuvent être propres à continuer de faire fonctionner la pompe hydraulique électrique lorsque la pression hydraulique à l'intérieur de l'accumulateur est supérieure ou égale au premier seuil.

L'invention propose également un véhicule, éventuellement de type automobile, et comprenant, d'une part, une chaîne de transmission hybride comportant un moteur thermique couplé à une boîte de vitesses via un organe de couplage et une machine motrice électrique alimentée en courant électrique par une batterie, et, d'autre part, un dispositif de contrôle du type de celui présenté ci-avant.

Par exemple, ce véhicule peut également comprendre un mécanisme de roue libre auquel sont couplées au moins la machine motrice électrique et la pompe hydraulique mécanique.

Egalement par exemple, dans ce véhicule, un arbre moteur, couplant le moteur thermique à l'organe de couplage, peut être également couplé au mécanisme de roue libre.

D'autres caractéristiques et avantages de l'invention apparaîtront à l'examen de la description détaillée ci-après, et des dessins annexés, sur lesquels :

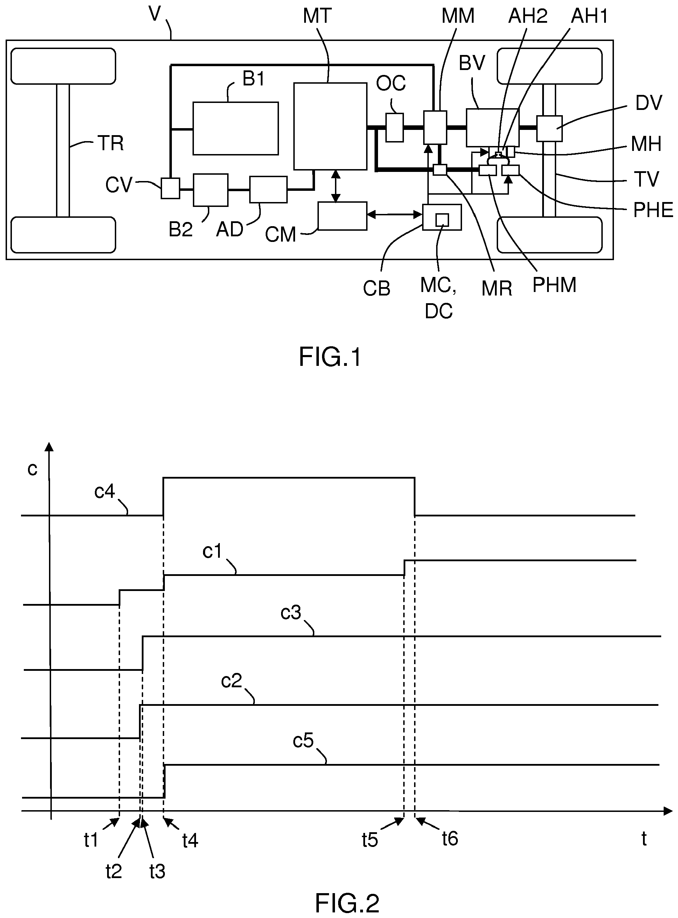

- la figure 1 illustre schématiquement et fonctionnellement un véhicule comprenant une chaîne de transmission hybride et un calculateur équipé d'un dispositif de contrôle selon l'invention, et
- la figure 2 illustre schématiquement au sein d'un diagramme cinq courbes (c1 à c5) d'évolution temporelle respectivement d'un état d'activation d'un ensemble de constituants de la chaîne de transmission hybride, d'un état du réseau d'alimentation électrique, d'une consigne d'activation de cet ensemble, de la consigne de la machine motrice électrique, et d'un état d'activation de la pompe hydraulique électrique.

L'invention a notamment pour but de proposer un dispositif de contrôle DC destiné à équiper un véhicule V ayant une chaîne de transmission hybride comprenant un moteur thermique couplé, via un organe de couplage OC et une machine motrice électrique MM, à une boîte de vitesses BV dont le fonctionnement est contrôlé par un actionneur hydraulique AH1.

Dans ce qui suit, on considère, à titre d'exemple non limitatif, que le véhicule V est de type automobile. Il s'agit par exemple d'une voiture. Mais l'invention n'est pas limitée à ce type de véhicule hybride parallèle. Elle concerne en effet tout type de véhicule comprenant une chaîne de transmission hybride à boîte de vitesses BV à fonctionnement contrôlé par un actionneur hydraulique. Par conséquent, elle concerne non seulement les véhicules terrestres, mais également les bateaux.

On a schématiquement représenté sur la figure 1 un véhicule V comprenant une chaîne de transmission hybride et un dispositif de contrôle DC selon l'invention.

La chaîne de transmission hybride comprend notamment un groupe motopropulseur (ou GMP) hybride, un organe de couplage OC, et une boîte de vitesses BV à actionneur hydraulique AH1.

Le GMP hybride comprend notamment un moteur thermique MT, une machine motrice électrique MM, et au moins une première batterie B1.

On entend ici par « moteur thermique MT » un moteur consommant du carburant ou des produits chimiques.

Le moteur thermique MT comprend un vilebrequin (non représenté) qui est solidarisé fixement à un arbre moteur afin d'entraîner ce dernier en rotation. Le fonctionnement de ce moteur thermique MT est contrôlé par un premier calculateur CM.

La boîte de vitesses BV comprend au moins un arbre d'entrée (ou primaire) destiné à recevoir le couple produit par le moteur thermique MT via l'organe de couplage OC et la machine motrice électrique MM, et un arbre de sortie destiné à recevoir ce couple via l'arbre d'entrée afin de le communiquer à un arbre de transmission auquel il est couplé et qui est couplé indirectement aux roues (ici du train avant TV du véhicule V), de préférence via un différentiel avant DV. Mais dans une variante de réalisation l'arbre de transmission pourrait être chargé d'entraîner en rotation les roues du train arrière TR du véhicule V (de préférence via un différentiel arrière).

On notera que la boîte de vitesses BV peut être de n'importe quel type dès lors que son fonctionnement est contrôlé par un actionneur hydraulique AH1. Par conséquent, la boîte de vitesses BV pourra être automatique (ou BVA) ou manuelle pilotée (ou BVMP) ou encore à double embrayage (ou DCT).

L'actionneur hydraulique AH1 est commandé par un moteur hydraulique MH qui comporte un accumulateur AH2 alimenté en fluide par au moins une pompe hydraulique mécanique PHM.

Le fonctionnement de ce moteur hydraulique MH peut, par exemple et comme illustré non limitativement sur la figure 1, être contrôlé par un second calculateur CB. On notera que dans une variante de réalisation le fonctionnement du moteur hydraulique MH pourrait être contrôlé par le premier calculateur CM (en particulier lorsqu'il supervise la chaîne de transmission).

Ce second calculateur CB met en oeuvre un mécanisme de recharge de l'accumulateur AH2 pour faire remonter sa pression hydraulique à une pression prédéfinie dès que sa pression devient inférieure à un seuil prédéfini, ou bien un mécanisme de maintien d'une pression minimale dans l'accumulateur AH2 par rotation permanente.

L'organe de couplage OC est propre à coupler l'arbre moteur à l'arbre primaire, via la machine motrice électrique MM, afin de transférer du couple de cet arbre moteur vers l'arbre primaire. Par exemple, cet organe de couplage OC peut être un embrayage. Dans ce cas, l'embrayage OC comprend un volant moteur solidarisé fixement à l'arbre moteur et un disque d'embrayage solidarisé fixement à l'arbre primaire. Mais cela n'est pas obligatoire. En effet, l'organe de couplage OC pourra également être un convertisseur hydraulique de couple.

La machine motrice électrique MM est destinée à produire du couple, à partir de l'énergie électrique qui est stockée dans la première batterie B1, pour déplacer le véhicule V, soit seule, soit en complément du moteur thermique MT. Elle est donc couplée à la première batterie B1 (et plus précisément au réseau d'alimentation électrique dont fait partie la première batterie B1), éventuellement via un onduleur (non représenté). Par exemple, elle est de type basse tension (par exemple environ 220 V).

La chaine de transmission comprend également une machine électrique AD (démarreur ou alterno-démarreur) qui est couplée au moteur thermique MT, notamment pour le lancer lors d'un démarrage. Cette machine électrique AD est également couplée à une seconde batterie (de servitude) B2, par exemple de type très basse tension (par exemple 12 V, 24 V ou 48V), comme illustré non limitativement sur la figure 1. Mais en variante cette machine électrique AD pourrait être couplée à la première batterie B1 (en l'absence de seconde batterie B2).

Comme illustré non limitativement sur la figure 1, on peut également prévoir un convertisseur CV de type DC/DC entre les première B1 et seconde B2 batteries, de manière à assurer l'alimentation électrique du réseau de bord du véhicule V si la machine électrique AD fonctionne sous 220 V.

Le véhicule V comprend également un dispositif de contrôle DC chargé de contrôler la machine motrice électrique MM dans une situation particulière.

Par exemple, et comme illustré non limitativement sur la figure 1, ce dispositif de contrôle DC peut faire partie du second calculateur CB qui contrôle le fonctionnement d'au moins la boîte de vitesses BV et plus précisément de son actionneur hydraulique AH1. Mais dans des variantes non illustrées, il pourrait soit faire partie du premier calculateur CM, soit comprendre son propre calculateur. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Un dispositif de contrôle DC, selon l'invention, comprend principalement des moyens de contrôle MC. Ces derniers (MC) sont propres à faire fonctionner la machine motrice électrique MM selon un régime choisi pour induire un entraînement de la pompe hydraulique mécanique PHM propre à augmenter la pression à l'intérieur de l'accumulateur AH2, en cas de détection d'une situation particulière qui requiert une augmentation rapide de la pression hydraulique à l'intérieur de l'accumulateur AH2 au moins jusqu'à un premier seuil s1 lorsque seule la machine motrice électrique MM doit fonctionner.

En d'autres termes, lorsque le moteur thermique MT ne fonctionne pas (et ne doit pas fonctionner), on fait fonctionner spécifiquement la machine motrice électrique MM selon un régime choisi pour entraîner la pompe hydraulique mécanique PHM et ainsi augmenter la pression dans l'accumulateur AH2. Cela permet avantageusement une augmentation rapide de la pression, typiquement en environ 0,5 s, alors qu'en utilisant une pompe hydraulique électrique comme dans les chaînes de transmission hybride de l'art antérieur la durée nécessaire à cette augmentation peut atteindre environ 2 s.

A titre d'exemple, le régime choisi auquel on fait fonctionner la machine motrice électrique MM peut être compris entre environ 1000 tours/minute et environ 5000 tours/minute. Par exemple, ce régime peut être choisi égal à 3000 tours/minute.

La valeur du premier seuil s1 peut éventuellement dépendre de l'actionneur hydraulique AH1 utilisé. A titre d'exemple, le premier seuil s1 peut être compris entre environ 5 bars et environ 30 bars.

Pour que la machine motrice électrique MM puisse entraîner la pompe hydraulique mécanique PHM, il faut par exemple, comme illustré sur la figure 1, qu'un mécanisme de roue libre MR assure le couplage entre au moins la machine motrice électrique MM et la pompe hydraulique mécanique PHM. Mais ce couplage pourrait être réalisé au moyen d'un autre type d'organe de couplage, comme par exemple un système d'engrenages simples.

On notera que dans l'exemple illustré non limitativement sur la figure 1, le mécanisme de roue libre MR assure également le couplage entre l'arbre moteur (qui couple le moteur thermique MT à l'organe de couplage OC), et la pompe hydraulique mécanique PHM. Cela permet en effet d'entraîner cette dernière (PHM) avec le moteur thermique MT, lorsque ce dernier est en fonctionnement.

On notera également que les moyens de contrôle MC peuvent, par exemple, être propres à détecter la situation particulière précitée lorsque la température à l'extérieur (ou en variante à l'intérieur) de la boîte de vitesses BV est inférieure à un second seuil s2 prédéfini. Plus cette température est faible, plus elle entraine une augmentation de la viscosité des fluides et donc plus la résistance est importante (et par conséquent nécessite une plus grande puissance pour la même mise en pression). A titre d'exemple, le second seuil s2 peut être compris entre environ 0°C et environ -20°C.

Mais dans une variante de réalisation, on peut envisager de faire fonctionner la pompe hydraulique mécanique PHM systématiquement lors de chaque activation d'un ensemble comprenant au moins la boîte de vitesses BV, l'organe de couplage OC, la machine motrice électrique MM et la pompe hydraulique mécanique PHM, indépendamment de la température.

On notera également que les moyens de contrôle MC peuvent, par exemple, être propres à faire fonctionner la machine motrice électrique MM selon le régime choisi, d'une part, après avoir reçu une information de fin d'initialisation de l'ensemble précité (boîte de vitesses BV, organe de couplage OC, machine motrice électrique MM et pompe hydraulique mécanique PHM), et, d'autre part, après vérification d'une aptitude de la première batterie B1 à alimenter la machine motrice électrique MM pour qu'elle fonctionne selon le régime choisi.

La phase d'initialisation de l'ensemble précité comprend notamment des diagnostics assurant le fonctionnement sécuritaire de la machine motrice électrique MM, et l'initialisation des calculs du second calculateur CB.

On comprendra en effet que si cet ensemble n'a pas été initialisé et/ou si la première batterie B1 n'est pas en mesure d'alimenter suffisamment la machine motrice électrique MM pour qu'elle puisse fonctionner selon le régime choisi, il est inutile et dangereux de faire fonctionner cette dernière (MM).

On notera également que les moyens de contrôle MC peuvent être propres à arrêter de faire fonctionner la machine motrice électrique MM selon le régime choisi lorsque la pression hydraulique à l'intérieur de l'accumulateur AH2 est supérieure ou égale au premier seuil s1. On comprendra en effet que dans ce cas l'actionneur AH1 est immédiatement en mesure d'agir aussi rapidement que souhaité sur la boîte de vitesses BV, et donc on n'a plus besoin, momentanément, de continuer de recharger l'accumulateur AH2.

On notera également, comme illustré non limitativement sur la figure 1, que la chaîne de transmission peut également et éventuellement comprendre une pompe hydraulique électrique PHE couplée à l'accumulateur AH2 et à la première batterie B1. Cette pompe hydraulique électrique PHE est propre, lorsqu'elle est alimentée en courant électrique par la première batterie B1, à augmenter la pression hydraulique à l'intérieur de l'accumulateur AH2, d'une façon similaire à l'augmentation induite par la pompe hydraulique mécanique PHM, mais notablement moins rapidement que ne le fait cette dernière (PHM). Dans ce cas, les moyens de contrôle MC sont propres à faire fonctionner la pompe hydraulique électrique PHE en contrôlant son alimentation électrique, en complément de la pompe hydraulique mécanique PHM, en cas de détection de la situation particulière précitée. Ce fonctionnement conjoint et simultané des pompes hydrauliques mécanique PHM et électrique PHE permet avantageusement de réaliser la recharge encore plus rapidement que lorsque seule la pompe hydraulique mécanique PHM est utilisée.

Avec ce dernier agencement, optionnel, les moyens de contrôle MC peuvent être propres à continuer de faire fonctionner la pompe hydraulique électrique PHE lorsque la pression hydraulique à l'intérieur de l'accumulateur AH2 est supérieure ou égale au premier seuil s1. Cette option est destinée à maintenir la pression malgré les pertes hydrauliques.

Un exemple non limitatif de mise en œuvre de l'invention est décrit ci-après en référence au diagramme de la figure 2. Dans ce diagramme l'axe des abscisses (t) correspond au temps, l'axe des ordonnées (c) correspond à une consigne ou un état, et :
- une première courbe c1 est un exemple d'évolution temporelle de l'état d'activation de l'ensemble précité (de constituants de la chaîne de transmission hybride),
- une deuxième courbe c2 est un exemple d'évolution temporelle de l'état du réseau d'alimentation électrique qui comprend la première batterie B1,
- une troisième courbe c3 est un exemple d'évolution temporelle de la consigne d'activation de cet ensemble,
- une quatrième courbe c4 est un exemple d'évolution temporelle de la consigne de la machine motrice électrique MM, et
- une cinquième courbe c5 est un exemple d'évolution temporelle de l'état d'activation de la pompe hydraulique électrique PHE.

Peu avant un instant t1, l'ensemble précité (de constituants de la chaîne de transmission hybride) est dans un état inactif, et les moyens de contrôle MC détectent la situation particulière précitée (besoin d'une augmentation rapide de la pression de l'accumulateur AH2 en l'absence de fonctionnement du moteur thermique MT). Le second calculateur C2 en informe immédiatement le dispositif de contrôle DC, qui attend alors que l'ensemble précité soit initialisé à l'initiative du second calculateur C2.

A l'instant t1, la fin d'initialisation de l'ensemble est effective et donc l'état d'activation de cet ensemble change (voir c1), ce dont est informé le dispositif de contrôle DC par un message. Le dispositif de contrôle DC vérifie alors si la première batterie B1 est apte à alimenter la machine motrice électrique MM pour qu'elle fonctionne selon le régime choisi. A l'instant t2, la première batterie B1 présente cette aptitude, comme l'atteste le changement d'état du réseau d'alimentation électrique (voir c2).

A l'instant t3, qui est très rapproché de t2, le dispositif de contrôle DC déclenche l'activation de l'ensemble précité en changeant la consigne d'activation de ce dernier (voir c3).

A l'instant t4, le dispositif de contrôle DC considère que la machine motrice électrique MM est pilotable. Il en résulte un nouveau changement de l'état d'activation de l'ensemble précité. Le dispositif de contrôle DC génère alors une consigne destinée à faire fonctionner la machine motrice électrique MM selon le régime choisi (par exemple 3000 tours/minute) (voir c4), afin de faire fonctionner la pompe hydraulique mécanique PHM. Dans le même temps, le dispositif de contrôle DC déclenche le fonctionnement de la pompe hydraulique électrique PHE, afin qu'elle aide la pompe hydraulique mécanique PHM. L'état d'activation de la pompe hydraulique électrique PHE passe alors d'inactif à actif (voir c5).

A l'instant t5, le dispositif de contrôle DC est informé du fait que l'accumulateur AH2 est rechargé (pression supérieure ou égale à s1), par un nouveau changement de l'état d'activation de l'ensemble précité du fait que l'actionneur hydraulique AH1 est désormais prêt à agir sur la boîte de vitesses BV (voir c1).

A l'instant t6, le dispositif de contrôle DC annule la consigne de régime de la machine motrice électrique MM (voir c4).

On notera qu'ici après l'instant t6 l'état d'activation de la pompe hydraulique électrique PHE demeure inchangé (c'est-à-dire actif) afin de maintenir la pression dans l'accumulateur AH2 pour le roulage à venir.

## Revendications

1. Dispositif de contrôle (DC) pour un véhicule (V) à chaîne de transmission hybride comprenant un moteur thermique (MT) couplé, via un organe de couplage (OC) et une machine motrice électrique (MM) alimentée en courant électrique par une batterie (B1), à une boîte de vitesses (BV) dont le fonctionnement est contrôlé par un actionneur hydraulique (AH1) commandé par un moteur hydraulique (MH) comportant un accumulateur (AH2) alimenté en fluide par une pompe hydraulique mécanique (PHM), **caractérisé en ce qu'**il comprend des moyens de contrôle (MC) propres à faire fonctionner ladite machine motrice électrique (MM) selon un régime choisi pour induire un entraînement de ladite pompe hydraulique mécanique (PHM) propre à augmenter une pression à l'intérieur dudit accumulateur (AH2), en cas de détection d'une situation requérant une augmentation rapide de la pression hydraulique à l'intérieur dudit accumulateur (AH2) au moins jusqu'à un premier seuil lorsque seule ladite machine motrice électrique (MM) doit fonctionner.

2. Dispositif selon la revendication 1, **caractérisé en ce que** lesdits moyens de contrôle (MC) sont propres à détecter ladite situation lorsqu'une température à l'extérieur de ladite boîte de vitesses (BV) est inférieure à un second seuil prédéfini.

3. Dispositif selon l'une des revendications 1 et 2, **caractérisé en ce que** lesdits moyens de contrôle (MC) sont propres à faire fonctionner ladite machine motrice électrique (MM) selon ledit régime choisi après réception d'une information de fin d'initialisation d'un ensemble comprenant au moins ladite boîte de vitesses (BV), ledit organe de couplage (OC), ladite machine motrice électrique (MM) et ladite pompe hydraulique mécanique (PHM), et après vérification d'une aptitude de ladite batterie (B1) à alimenter ladite machine motrice électrique (MM) pour qu'elle fonctionne selon ledit régime choisi.

4. Dispositif selon l'une des revendications 1 à 3, **caractérisé en ce que** lesdits moyens de contrôle (MC) sont propres à arrêter de faire fonctionner ladite machine motrice électrique (MM) selon ledit régime choisi lorsque ladite pression hydraulique à l'intérieur dudit accumulateur (AH2) est supérieure ou égale audit premier seuil.

5. Dispositif selon l'une des revendications 1 à 4, **caractérisé en ce que**, lorsque ladite chaîne de transmission comprend une pompe hydraulique électrique (PHE) couplée à l'accumulateur (AH2) et propre, lorsqu'elle est alimentée en courant électrique par ladite batterie (B1), à augmenter ladite pression hydraulique à l'intérieur dudit accumulateur (AH2), lesdits moyens de contrôle (MC) sont propres à faire fonctionner ladite pompe hydraulique électrique (PHE) en contrôlant son alimentation électrique, en complément de ladite pompe hydraulique mécanique (PHM), en cas de détection de ladite situation.

6. Dispositif selon la revendication 5, **caractérisé en ce que** lesdits moyens de contrôle (MC) sont propres à continuer de faire fonctionner ladite pompe hydraulique électrique (PHE) lorsque ladite pression hydraulique à l'intérieur de l'accumulateur (AH2) est supérieure ou égale audit premier seuil.

7. Véhicule (V) comprenant une chaîne de transmission hybride comportant un moteur thermique (MT) couplé à une boîte de vitesses (BV) via un organe de couplage (OC) et une machine motrice électrique (MM) alimentée en courant électrique par une batterie (B1), **caractérisé en ce qu'**il comprend en outre un dispositif de contrôle (DC) selon l'une des revendications précédentes.

8. Véhicule selon la revendication 7, **caractérisé en ce qu'**il comprend un mécanisme de roue libre (MR) auquel sont couplées au moins ladite machine motrice électrique (MM) et ladite pompe hydraulique mécanique (PHM).

9. Véhicule selon l'une des revendications 7 et 8, **caractérisé en ce qu'**un arbre moteur (AM), couplant ledit moteur thermique (MT) audit organe de couplage (OC), est également couplé audit mécanisme de roue libre (MR).

10. Véhicule selon l'une des revendications 7 à 9, **caractérisé en ce qu'**il est de type automobile.

## Patentansprüche

1. Steuervorrichtung (DC) für ein Fahrzeug (V) mit einer Hybridübertragungskette, die einen gekoppelten thermischen Motor (MT) umfasst, über ein Kupplungselement (OC) und eine Elektromotormaschine (MM), die von a mit elektrischem Strom versorgt wird Batterie (B1) an ein Getriebe (BV), dessen Betrieb von einem hydraulischen Aktuator (AH1) gesteuert wird, der von einem Hydraulikmotor (MH) gesteuert wird, der einen Speicher (AH2) umfasst, der von einer mechanischen Hydraulikpumpe (PHM) mit Flüssigkeit versorgt wird, **dadurch gekennzeichnet, dass** es Steuermittel (MC) umfasst, die in der Lage sind, die Elektromotormaschine (MM) gemäß einem Regime zu betreiben, das gewählt wurde, um einen Antrieb der mechanischen Hydraulikpumpe (PHM) zu induzieren, der in der Lage ist, einen Druck bei zu erhöhen innerhalb des Akkumulators (AH2), im Falle der Erkennung einer Situation, die einen schnellen Anstieg des Hydraulikdrucks innerhalb des Akkumulators (AH2) erfordert, mindestens bis zu einer ersten Schwelle, wenn nur die Elektromotor-Maschine das (MM) sollte funktionieren.

2. Steuervorrichtung nach Anspruch 1, **dadurch gekennzeichnet, dass** die Steuermittel (MC) die Situation erfassen können, wenn eine Temperatur außerhalb des Getriebes (BV) unter einem zweiten vordefinierten Schwellenwert liegt.

3. Steuervorrichtung nach einem der Ansprüche 1 und 2, **gekennzeichnet dadurch, dass** die Steuermittel (MC) so ausgelegt sind, dass sie die Elektromotormaschine (MM) gemäß dem nach Erhalt eines Informationsende gewählten Regimes betreiben Initialisierung einer Baugruppe, die mindestens das Getriebe (BV), das Kupplungselement (OC), die elektrische Antriebsmaschine (MM) und die mechanische Hydraulikpumpe (PHM) umfasst, und nach Überprüfung der Eignung der Batterie (B1) Zuführen der Elektromotormaschine (MM), so dass sie gemäß der gewählten Geschwindigkeit arbeitet.

4. Steuervorrichtung nach einem der Ansprüche 1 bis 3, **gekennzeichnet dadurch, dass** die Steuermittel (MC) so ausgelegt sind, dass sie den Betrieb der Elektromotormaschine (MM) gemäß dem gewählten Regime stoppen, wenn der Hydraulikdruck im Inneren ist des Akkumulators (AH2) ist größer oder gleich der ersten Schwelle.

5. Steuervorrichtung nach einem der Ansprüche 1 bis 4, **dadurch gekennzeichnet, dass**, wenn die Übertragungskette eine elektrische Hydraulikpumpe (PHE) umfasst, die mit dem Akkumulator (AH2) gekoppelt ist und fähig ist, wenn sie mit elektrischem Strom versorgt wird Durch die Batterie (B1) werden beim Erhöhen des Hydraulikdrucks in dem Akkumulator (AH2) die Steuermittel (MC) angepasst, um die elektrische Hydraulikpumpe (PHE) zusätzlich durch Steuern ihrer elektrischen Versorgung zu betreiben die mechanische Hydraulikpumpe (PHM) im Falle der Erkennung dieser Situation.

6. Steuervorrichtung nach Anspruch 5, **dadurch gekennzeichnet, dass** die Steuermittel (MC) so ausgelegt sind, dass sie die elektrische Hydraulikpumpe (PHE) weiter betreiben, wenn der Hydraulikdruck im Druckspeicher (AH2) höher ist oder gleich der ersten Schwelle.

7. Fahrzeug (V) mit einer Hybridübertragungskette, die eine Wärmekraftmaschine (MT) umfasst, die über ein Kupplungselement (OC) mit einem Getriebe (BV) gekoppelt ist, und eine Elektromotormaschine (MM), die von a mit elektrischem Strom versorgt wird Batterie (B1), **dadurch gekennzeichnet, dass** sie ferner eine Steuervorrichtung (DC) gemäß einem der vorhergehenden Ansprüche umfasst.

8. Fahrzeug nach Anspruch 7, **dadurch gekennzeichnet, dass** es einen Freilaufmechanismus (MR) umfasst, an den mindestens die Elektromotormaschine (MM) und die mechanische Hydraulikpumpe (PHM) gekoppelt sind.

9. Fahrzeug nach einem der Ansprüche 7 und 8, **dadurch gekennzeichnet, dass** eine Antriebswelle (AM), die die Wärmekraftmaschine (MT) mit dem Kupplungselement (OC) koppelt, auch mit dem Freilaufmechanismus (MR) gekoppelt ist.

10. Fahrzeug nach einem der Ansprüche 7 bis 9, **dadurch gekennzeichnet, dass** es vom Kraftfahrzeugtyp ist.

## Claims

1. Control device (DC) for a vehicle (V) with hybrid transmission chain comprising a coupled heat engine (MT), via a coupling member (OC) and an electric motor machine (MM) supplied with electric current by a battery (B1), to a gearbox (BV) whose operation is controlled by a hydraulic actuator (AH1) controlled by a hydraulic motor (MH) comprising an accumulator (AH2) supplied with fluid by a mechanical hydraulic pump (PHM), **characterized in that** it comprises control means (MC) capable of operating said electric motor machine (MM) according to a regime chosen to induce a drive of said mechanical hydraulic pump (PHM) capable of increasing a pressure at inside said accumulator (AH2), in the event of detection of a situation requiring a rapid increase in the hydraulic pressure inside said accumulator (AH2) at least up to a first threshold when only said electric motor machine (MM) should work.

2. Control device according to claim 1, **characterized in that** said control means (MC) are capable of detecting said situation when a temperature outside of said gearbox (BV) is below a second predefined threshold.

3. Control device according to one of claims 1 and 2, **characterized in that** said control means (MC) are adapted to operate said electric motor machine (MM) according to said regime chosen after receipt of an end of information initialization of an assembly comprising at least said gearbox (BV), said coupling member (OC), said electric motor machine (MM) and said mechanical hydraulic pump (PHM), and after verification of a suitability of said battery (B1) supplying said electric motor machine (MM) so that it operates according to said chosen regime.

4. Control device according to one of claims 1 to 3, **characterized in that** said control means (MC) are adapted to stop operating said electric motor machine (MM) according to said chosen regime when said hydraulic pressure inside of said accumulator (AH2) is greater than or equal to said first threshold.

5. Control device according to one of claims 1 to 4, **characterized in that**, when said transmission chain comprises an electric hydraulic pump (PHE) coupled to the accumulator (AH2) and capable, when it is supplied with electric current by said battery (B1), in increasing said hydraulic pressure inside said accumulator (AH2), said control means (MC) are capable of operating said electric hydraulic pump (PHE) by controlling its electrical supply, in addition to said mechanical hydraulic pump (PHM), in the event of detection of said situation.

6. Control device according to claim 5, **characterized in that** said control means (MC) are adapted to continue to operate said electric hydraulic pump (PHE) when said hydraulic pressure inside the accumulator (AH2) is higher or equal to said first threshold.

7. Vehicle (V) comprising a hybrid transmission chain comprising a heat engine (MT) coupled to a gearbox (BV) via a coupling member (OC) and an electric motor machine (MM) supplied with electric current by a battery (B1), **characterized in that** it further comprises a control device (DC) according to one of the preceding claims.

8. Vehicle according to claim 7, **characterized in that** it comprises a freewheel mechanism (MR) to which are coupled at least said electric motor machine (MM) and said mechanical hydraulic pump (PHM).

9. Vehicle according to one of claims 7 and 8, **characterized in that** a drive shaft (AM), coupling said heat engine (MT) to said coupling member (OC), is also coupled to said freewheel mechanism (MR).

10. Vehicle according to one of claims 7 to 9, **characterized in that** it is of the automobile type.
